(19) Europäisches Patentamt / European Patent Office / Office européen des brevets

(11) **EP 4 489 396 A1**

(12) **EUROPEAN PATENT APPLICATION**

(43) Date of publication:
08.01.2025 Bulletin 2025/02

(21) Application number: 24186655.7

(22) Date of filing: 04.07.2024

(51) International Patent Classification (IPC):
H04N 19/132 (2014.01)     B60R 99/00 (2009.01)
H04N 19/167 (2014.01)     H04N 19/17 (2014.01)
H04N 19/59 (2014.01)

(52) Cooperative Patent Classification (CPC):
H04N 19/132; B60R 99/00; H04N 19/167;
H04N 19/17; H04N 19/59

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 05.07.2023 CN 202310820061

(71) Applicant: Faurecia Clarion Electronics (Xiamen)
Co., Ltd.
Xiamen, Fujian 361008 (CN)

(72) Inventors:
• JIE, Qiu
Xiamen, Fujian, 361008 (CN)
• YAPING, Wu
Xiamen, Fujian, 361008 (CN)
• JIANFU, Luo
Xiamen, Fujian, 361008 (CN)

(74) Representative: Prinz & Partner mbB
Patent- und Rechtsanwälte
Rundfunkplatz 2
80335 München (DE)

(54) **A METHOD FOR DISPLAYING IMAGES OUTSIDE A VEHICLE AND A DISPLAY DEVICE THEREOF**

(57) The present invention provides a display method for images outside a vehicle and display device thereof. The display method comprises following steps: obtaining an original image from outside the vehicle; obtaining vehicle data and/or driver's data to determine the original image's usage scenario; according to the usage scenario, the original image is divided into at least one first area image of concern and at least one second area image of no concern; determining respectively a first compression coefficient corresponding to the first area image and a second compression coefficient corresponding to the second area image, wherein the first compression coefficient is smaller than the second compression coefficient; and according to the first compression coefficient and the second compression coefficient, performing partition compression on the first area image and the second area image to obtain a display image. By following these steps, the display method can not only meet the clarity of driver's area of concern during driving, but also take into account the display of images in other areas to ensure that there are no blind spots during the entire driving process.

FIG.3

EP 4 489 396 A1

# Description

## Technical Field

The present invention relates to a field of image display, specifically relates to a display method for images outside a vehicle, a display device for images outside a vehicle, and a computer-readable storage medium.

## Background

Currently, some vehicles on the market are equipped with Electronic rearview mirrors (Electronic mirror, Emirror), which replace traditional exterior rearview mirrors with cameras for electronic rearview mirror, aiming to provide drivers with a better view of the surrounding environment. Electronic rearview mirrors provide a wider field of view, improve visibility in adverse weather or light conditions, and also provide important safety warnings.

In current electronic rearview mirror display solutions, in order to meet the needs of applications such as electronic rearview mirrors and Around View Monitor system (AVM), camera's Field Of View (FOV) is often relatively large, but the actual field of view displayed on the vehicle's display screen needs to take into account the requirements for the target area in different applications, and often needs to perform processing methods such as cropping and image compression on the collected images so that the set image area can be displayed on the display screen.

If using image cropping, these cropped images , these area where the images are cropped will not be provided to the display screen and will not be observed by the driver, which undoubtedly artificially adds new visual blind spots. If using full-image compression, although it can provide a complete image with multiple viewing angles, it cannot meet the high-definition requirements for local area images in the display image. Even if using a high-resolution camera, due to the limitation of the display screen resolution, the system needs to compress the entire image, which will result in insufficient pixels per unit area (insufficient clarity) due to an excessively large field of view, therefore, the above technical problems still cannot be solved well.

In order to solve the above problems existing in the prior art, this field is in urgent need of a display technology for images outside a vehicle that can not only meet the clarity of the driver's area of concern during driving, but also take into account the display of images in other areas to ensure that there are no blind spots during the entire driving process.

## Summary

A brief overview of one or more aspects is provided below to provide a basic understanding of these aspects. The summary is not an extensive overview of all of the aspects that are contemplated, and is not intended to identify key or decisive elements in all aspects. The sole purpose of the summary is to present some concepts of one or more aspects in a simplified form as a prelude to the more detailed description that is presented later.

In order to overcome the above-mentioned deficiencies in the prior art, the present invention provides a display method for images outside a vehicle, a display device for images outside a vehicle, and a computer-readable storage medium, which can not only meet the clarity of driver's area of concern during driving, but also take into account the display of images in other areas to ensure that there are no blind spots during the entire driving process.

Specifically, according to the first aspect of the present invention, the above-mentioned display method for images outside a vehicle provided comprises the following steps: obtaining an original image from outside the vehicle; obtaining vehicle data and/or driver's data to determine the original image's usage scenario; according to the usage scenario, the original image is divided into at least one first area image of concern and at least one second area image of no concern; determining respectively a first compression coefficient corresponding to the first area image and a second compression coefficient corresponding to the second area image, wherein the first compression coefficient is smaller than the second compression coefficient; and according to the first compression coefficient and the second compression coefficient, performing partition compression on the first area image and the second area image to obtain a display image.

Optionally, according to some embodiments of the prevent invention, the vehicle data comprises driving speed and/or turn signal, the step of obtaining vehicle data and/or driver's data to determine the original image's usage scenario comprises: in response to the driving speed being greater than a preset speed threshold, it is determined that the vehicle is in a high-speed driving mode; and/or in response to the driving speed being less than or equal to the speed threshold, it is determined that the vehicle is in a low-speed driving mode; and/or in response to the steering signal, it is determined that the vehicle is in steering mode.

Optionally, according to some embodiments of the prevent invention, the step of according to the usage scenario, the original image is divided into at least one first area image of concern and at least one second area image of no concern comprises: in the high-speed driving mode, in the original image, at least one area image far away from the vehicle is determined as the first area image, and in the original image, at least one area image close to the vehicle is determined as the second area image; and/or in the low-speed driving mode, in the original image, at least one area image close to the vehicle is determined as the first area image, and in the original image, at least one area image far away from

3      **EP 4 489 396 A1**      4

the vehicle is determined as the second area image; and/or in the steering mode, in the original image, at least one area image located in the steering direction is determined as the first area image, and in the original image, other area images are determined as the second area image.

Optionally, according to some embodiments of the prevent invention, the driver's data comprises driver's eye movement signal, the step of obtaining vehicle data and/or driver's data to determine the original image's usage scenario comprises: in response to the eye movement signal indicating that the driver is observing a display screen, it is determined to be in observation mode. The step of according to the usage scenario, the original image is divided into at least one first area image of concern and at least one second area image of no concern comprises: in the observation mode, the driver's area of concern on the display screen is determined as the first area image, and in the original image, other area images are determined as the second area image.

Optionally, according to some embodiments of the prevent invention, the steps of determining respectively a first compression coefficient corresponding to the first area image and a second compression coefficient corresponding to the second area image comprises: setting corresponding to the first area image's first compression coefficient to 1, so that the first area image maintains its original first resolution; and according to the display screen's display resolution, the first resolution, and the second area image's original second resolution, setting corresponding to the second area image's second compression coefficient to be greater than 1 to compress the second resolution, so that the display image conforms to the display resolution.

Optionally, according to some embodiments of the prevent invention, the steps of according to the display screen's display resolution, the first resolution, and the second area image's original second resolution, setting corresponding to the second area image's second compression coefficient to be greater than 1 to compress the second resolution, so that the display image conforms to the display resolution comprises: according to a difference between the display screen's horizontal display resolution and the first area image's first horizontal resolution, determining each of the second area image's horizontal display resolutions that are in areas horizontally adjacent to the first area image; and according to a ratio of the horizontal display resolution and a sum of the second horizontal resolutions of the second area images that are in areas horizontally adjacent to the first area image, determining a fixed second horizontal compression coefficient of each of the second area images in areas horizontally adjacent to the first area image.

Optionally, according to some embodiments of the prevent invention, the steps of according to the display screen's display resolution, the first resolution, and the second area image's original second resolution, setting corresponding to the second area image's second compression coefficient to be greater than 1 to compress the second resolution, so that the display image conforms to the display resolution comprises: according to a difference between the display screen's vertical display resolution and the first area image's first vertical resolution, determining each of the second area image's vertical display resolutions that are in areas vertically adjacent to the first area image; and according to a ratio of the vertical display resolution and a sum of the second vertical resolutions of the second area images that are in areas vertically adjacent to the first area image, determining a fixed second vertical compression coefficient of each of the second area images in areas vertically adjacent to the first area image.

Optionally, according to some embodiments of the prevent invention, the steps of according to the display screen's display resolution, the first resolution, and the second area image's original second resolution, setting corresponding to the second area image's second compression coefficient to be greater than 1 to compress the second resolution, so that the display image conforms to the display resolution further comprises: according to the fixed second horizontal compression coefficient of each of the second area images in areas horizontally adjacent to the first area image, determining second horizontal compression coefficients of remaining second area images vertically adjacent to the second area image; and/or according to the fixed second vertical compression coefficient of each of the second area images in areas vertically adjacent to the first area image, determining second vertical compression coefficients of remaining second area images horizontally adjacent to the second area image.

Optionally, according to some embodiments of the prevent invention, the steps of according to the display screen's display resolution, the first resolution, and the second area image's original second resolution, setting corresponding to the second area image's the second compression coefficient to be greater than 1, compress the second resolution, so that the display image conforms to the display resolution further comprises: according to the first compression coefficient, the fixed second horizontal compression coefficient of each of the second area images in areas horizontally adjacent to the first area image, and horizontal distances from each of the second area images to the first area image, determining each of the second area image's gradient second horizontal compression coefficients; and according to the first compression coefficient, the fixed second vertical compression coefficient of each of the second area images in areas vertically adjacent to the first area image, and vertical distances from each of the second area images to the first area image, determining each of the second area image's gradient second vertical compression coefficients.

Optionally, according to some embodiments of the prevent invention, the steps of according to the first compression coefficient, the fixed second horizontal

**3**

compression coefficient of each of the second area images in areas horizontally adjacent to the first area image, and horizontal distances from each of the second area images to the first area image, determining each of the second area image's gradient second horizontal compression coefficients comprises: according to the first compression coefficient $k_1$, a fixed second horizontal compression coefficient $k_{20x}$ of second area images in areas horizontally adjacent to the first area image and an area centre abscissa $x_{20}$, and the first area image close to the second area image's critical abscissa $x_1$, determining each of the second area image's second horizontal compression coefficients' horizontal gradient slope

$$a_x = \frac{k_{20x} - k_1}{x_{20} - x_1}$$ ; and according to the horizontal gradient slope $a_x$, the first compression coefficient $k_1$, the critical abscissa $x_1$, and abscissas $x_2$ of each of the second area images, calculating the second area image's gradient second horizontal compression coefficient $k_{2x} = a_x \times (x_2 - x_1) + k_1$.

Optionally, according to some embodiments of the prevent invention, the steps of according to the first compression coefficient, the fixed second vertical compression coefficient of each of the second area images in areas vertically adjacent to the first area image, and vertical distances from each of the second area images to the first area image, determining each of the second area image's gradient second vertical compression coefficients comprises: according to the first compression coefficient $k_1$, a fixed second vertical compression coefficient $k_{20y}$ of second area images in areas vertically adjacent to the first area image and an area centre ordinate $y_{20}$, and the first area image close to the second area image's critical ordinate $y_1$, determining each of the second area image's second vertical compression coefficients' vertical gradient slope $$a_y = \frac{k_{20y} - k_1}{y_{20} - y_1}$$ ; and according to the vertical gradient slope $a_y$, the first compression coefficient $k_1$, the critical ordinate $y_1$, and ordinates $y_2$ of each of the second area images , calculating the second area image's gradient second vertical compression coefficient $k_{2y} = a_y \times (y_2 - y_1) + k_1$.

Optionally, according to some embodiments of the prevent invention, the steps of obtaining an original image from outside the vehicle comprises: via a camera facing rear of the vehicle to collect rear view images of the vehicle; or via the vehicle's Around View Monitor system to obtain panoramic images around the vehicle.

Furthermore, according to a second aspect of the present invention, the above-mentioned display device for images outside a vehicle is provided. The display device comprises a memory and a processor. The processor is connected to the memory and is configured to implement the above-mentioned display method for images outside a vehicle provided by the first aspect of the present invention.

Optionally, according to some embodiments of the prevent invention, the display device further comprises: at least one display screen, wherein the at least one display screen is arranged at a position of an exterior rearview mirror on a left side of the vehicle, a position of an exterior rearview mirror on a right side of the vehicle, and/or a position of an interior rearview mirror, and/or integrated into the vehicle's central control display screen.

In addition, according to a third aspect of the present invention, there is also provided a computer-readable storage medium, having computer instructions stored thereon. When the computer instructions are executed by a processor, the above-mentioned display method for images outside a vehicle provided by the first aspect of the present invention is implemented.

**Brief Description of the Drawings**

The above features and advantages of the present invention will be better understood after reading the detailed description of the embodiments of the present disclosure in conjunction with the following figures. In the figures, components are not necessarily drawn to scale, and components having similar related features may have the same or similar reference numerals.

Figure. 1 is a flowchart of a display method for images outside a vehicle provided according to some embodiments of the present invention;
Figure. 2 is a schematic diagram of an original image provided according to some embodiments of the present invention;
Figure. 3 is a curve schematic diagram of a fixed coefficient compression of a display image provided according to some embodiments of the present invention;
Figure. 4 is a curve schematic diagram of gradient coefficient compression of a display image provided according to some embodiments of the present invention; and
Figure. 5 is a structural block diagram of a display device for images outside a vehicle provided according to some embodiments of the present invention.

Reference signs

| S110~S150 | step; |
|---|---|
| 200 | original image; |
| 311, 321, 411, 421 | first area image; |
| 312, 322, 412, 422 | second area image; |
| 500 | display device; |
| 510 | memory; and |
| 520 | processor. |

**Detailed Description of Embodiments**

The embodiments of the present invention are described in the following detailed description. Other advantages and effects of the present invention will be readily apparent to those skilled in the art from this disclosure. Although the description of the present invention will be described in conjunction with the preferred embodiments, this is not a limitation of the present invention. On the contrary, the invention is described in connection with the embodiments so as to cover other alternatives or modifications that are possible in the embodiments of the present invention. In order to provide a thorough understanding of the present invention, many specific details are included in the following description. The present invention may also be practiced without these details. In addition, some specific details are omitted in the description in order to avoid confusing or obscuring the present invention.

In the description of the present invention, it should be noted that the terms "installation", "connecting", and "connected" should be understood broadly unless explicitly stated and defined otherwise. For example, the terms "installation", "connecting", and "connected" may be either a fixed connection, a detachable connection, or an integral connection; the terms may be either a mechanical connection or an electrical connection; the terms also may be either a direct connection, an indirect connection through an intermediate medium, or an internal connection between two components. The specific meaning of the above terms in the present invention can be understood in a specific case by those skilled in the art.

In addition, "up", "down", "left", "right", "top", "bottom", "horizontal", "vertical" used in the following description shall be understood as the orientation described in the paragraph and shown in the related figure. The relative term is used for convenience of description only, and does not mean that the device described therein is to be manufactured or operated in the specific orientation, and therefore should not be construed as limiting the present invention.

Understandably, although the terms "first", "second", "third", etc. may be used to describe various components, regions, layers and/or portions to distinguish different components, regions, layers and/or portions, the order of these components, regions, layers and/or portions described above should not be limited by the terms. Therefore, a first component, region, layer and/or portion mentioned below may be also mentioned as a second component, region, layer and/or portion without departing from some embodiments of the present invention.

As mentioned above, in the prior art, if using image cropping, these cropped images, these area where the images are cropped will not be provided to the display screen and will not be observed by the driver, which undoubtedly artificially adds new visual blind spots. If using full-image compression, although it can provide a complete image with multiple viewing angles, it cannot meet the high-definition requirements for local area images in the display image. Even if using a high-resolution camera, due to the limitation of the display screen resolution, the system needs to compress the entire image, which will result in insufficient pixels per unit area (insufficient clarity) due to an excessively large field of view, therefore, the above technical problems still cannot be solved well.

In order to solve the above problems existing in the prior art, the present invention provides a display method for images outside a vehicle, a display device for images outside a vehicle, and a computer-readable storage medium, which can not only meet the clarity of driver's area of concern during driving, but also take into account the display of images in other areas to ensure that there are no blind spots during the entire driving process.

In some non-limiting embodiments, the above-mentioned display method for images outside a vehicle provided by the first aspect of the present invention can be implemented by the above-mentioned display device for images outside a vehicle provided by the second aspect of the present invention.

The working principle of the above-mentioned display device for images outside a vehicle will be described below in conjunction with some embodiments of display method for images outside a vehicle. Those skilled in the art can understand that these embodiments of the display method for images outside a vehicle are only some non-limiting implementations provided by the present invention, and are intended to clearly demonstrate the main concept of the present invention and provide some specific methods for the public to implement, which is not used to limit all working modes or all functions of the display device for images outside a vehicle.

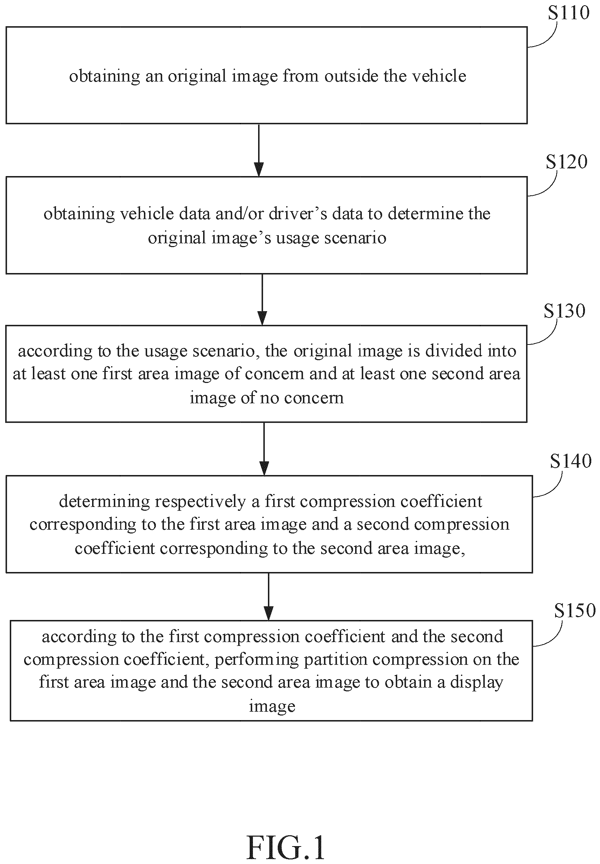

Please refer to Figure 1, Figure. 1 is a flowchart of a display method for images outside a vehicle provided according to some embodiments of the present invention. As shown in Fig. 1, in some embodiments, the display method for images outside a vehicle may mainly comprises the following steps:

Step S 110: obtaining an original image from outside the vehicle.

Specifically, in some embodiments, rear view images of the vehicle can be collected via camera facing rear of the vehicle; or panoramic images around the vehicle can also be obtained via the vehicle's Around View Monitor system. Those skilled in the art can understand that the configuration position of the image acquisition device, that is, the installation position of the camera or Around View Monitor system on the vehicle, is not limited to the several methods mentioned in these embodiments, any image acquisition device that can clearly collect the surroundings of the vehicle and its configuration are all within the protection scope of the present invention.

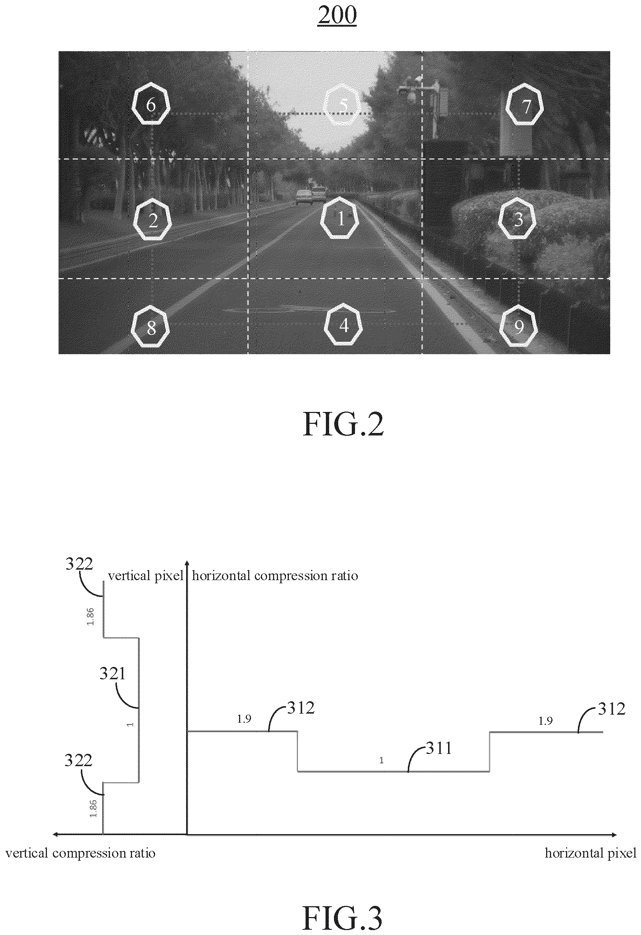

In some optional embodiments, through cameras or Around View Monitor systems installed on the vehicle, original images of the vehicle's external environment can be collected from multiple viewing angles. Please refer to Figure 2, Figure. 2 is a schematic diagram of an original image provided according to some embodiments of the present invention.

Optionally, the images captured by the camera or Around View Monitor system can be transmitted to the vehicle's electronic control unit for subsequent processing. The electronic control unit performs non-linear scaling transformation of a full screen area by area, according to the importance of different areas in different usage scenarios, adjust the scaling ratio of each area, and send the adjusted image to the display screen for display.

Next, please refer to Step S120: obtaining vehicle data and/or driver's data to determine the original image's usage scenario.

In some optional embodiments, the usage scenario of the original image can be determined based on intelligent control signals of some vehicle data in the vehicle system. Optionally, the vehicle data may comprise driving speed and/or turn signal.

Specifically, optionally, a speed threshold can be set, and the current driving speed of the vehicle can be compared with the speed threshold, and in response to the driving speed being greater than the preset speed threshold, it can be determined that the vehicle is currently in a high-speed driving mode. That is to say, the usage scenario of the original image 200 obtained at this time is the high-speed driving mode. In response to the driving speed being less than or equal to the speed threshold, it can be determined that the vehicle is currently in the low-speed driving mode. That is to say, the usage scenario of the original image 200 obtained at this time is the low-speed driving mode. In addition, in some embodiments, if the vehicle system sends a steering signal, it can be determined that the vehicle is currently in the steering mode. That is to say, the usage scenario of the original image 200 obtained at this time is the steering mode.

Further, in some optional embodiments, during driving, above vehicle data (such as speed signal, steering signal, etc.) can be combined to correspondingly modify the position of the area of concern in the screen to ensure that the area of concern can be displayed with the best clarity in any usage conditions.

In the prior art, although the vehicle system can automatically adjust the clipping area, the size range of the clipping area needs to be individually designed depending on the vehicle. For example, for road testing in the development stage and for correction before leaving the factory, the corresponding clipping areas in the two cases are different. By using the above embodiments of the present invention, the displayed areas can be appropriately increased, which is beneficial to improving the compatibility of the display system.

In other optional embodiments, the usage scenario of the original image can be determined based on driver's data or in combination with driver's data. Optionally, the driver's data may comprise driver's eye movement signal. Specifically, in some embodiments, a screen-based eye tracker can be installed inside the vehicle, or the driver can wear a small, portable eye tracker. Through eye trackers, and combined with human eye positioning technology, the driver's eye movement signal can be obtained. When the acquired eye movement signal of the driver indicates that the driver is observing the display screen, it may be determined that the original image 200 is in the observation mode.

Further, in some optional embodiments, the area where the eye movement signal is located and the image scaling ratio and displayed position of its surrounding areas can be appropriately adjusted to meet the clarity of the driver's area of concern while taking into account the display images in other areas to ensure that there are no blind spots during use.

Next, please refer to Step S130: according to the usage scenario, the original image is divided into at least one first area image of concern and at least one second area image of no concern.

Generally speaking, when the vehicle is in a high-speed driving mode and low-speed driving mode, the image area that the driver wants to pay more attention to will be different. Specifically, in some embodiments, when it is determined that the vehicle is in the high-speed driving mode, for the sake of driving safety, the driver may prefer to pay attention to a slightly farther (e.g., medium and long) distance area on the vehicle's driving route. Therefore, in the original image at least one area far away from the vehicle can be determined as the first area image of concern, and in the original image at least one area image close to the vehicle can be determined as the second area image of non-attention. As shown in Fig. 2, in this embodiment, according to different usage scenarios and according to the different degrees of attention of each partial image in the original image 200, the original image 200 is divided into 9 areas, including areas of concern and areas of no concern. The partial area 1 in the original image 200 can be defined as the first area image, and the partial areas 2 to 9 can be defined as the second area image.

In other embodiments, when it is determined that the vehicle is in the low-speed driving mode, the driver may prefer to pay attention to the area close to the vehicle body to avoid the vehicle from collision or friction. Therefore, at least one area image close to the vehicle in the original image may be determined as the first area image of concern, and at least one area image far away from the vehicle in the original image may be determined as the second area image of no concern. As shown in Fig. 2, in this embodiment, the images of partial areas 2, 3, 4, 8, and 9 in the original image 200 can be defined as the first area image, and the local areas 1, 5, 6, and 7 can be defined as the second area image.

Further, in other implementations, when it is determined that the vehicle is in the steering mode, the driver may prefer to pay attention to the area with more steering distance in the steering direction, such as information of multiple lanes adjacent to the turning lane. Therefore, at least one area image located in the steering direction in the original image may be determined as the first area image of concern, and other area images in the original image may be determined as the second area image of no concern. As shown in Fig. 2, in this embodiment, the images of partial areas 2, 3, 8, and 9 in the original image 200 can be defined as the first area image, and the partial areas 1, 4, 5, 6, and 7 can be defined as second area image.

Those skilled in the art can understand that the "concern" used to define the first area image in the present invention and the "no concern" used to define the second area image are a pair of relative concepts, wherein the "no concern " does not mean that there is no attention at all, but that the degree of attention relative to the first area image has been reduced. That is, during driving, the first area image in the original image is the most important, and the second area image is the second most important.

Optionally, in other embodiments, when it is determined that the vehicle is in the observation mode, the driver's area of concern on the display screen obtained by the human eye positioning technology can be determined as the first area image of concern, and other area images in the original image can be determined as the second area image of no concern. Generally speaking, human eye generally prefers to observe the centre of an image. Therefore, as shown in Fig. 2 , in this embodiment, the images of partial areas 1 and 4 tending to the centre in the original image 200 can be defined as the first area image, and the partial areas 2, 3, 5, 6, 7, 8 and 9 can be defined as the second area image.

Next, please refer to Step S140: determining respectively a first compression coefficient corresponding to the first area image and a second compression coefficient corresponding to the second area image.

Combined with shown in Fig. 2, in an embodiment of the present invention, different image compression processing methods can be adopted for the image pixels of each partial area divided in Fig. 2 to simultaneously achieve the display of the image with full field of view, and the beneficial technical effect of not reducing the imaging clarity of the area of concern.

Generally speaking, in one usage scenario (that is, after the usage scenario is determined), the area division and the size after division can be determined according to the usage scenario of the system, and the size of the partial image is a known condition.

For example, assume that the resolution of the original image captured by the camera is $1920\times1080$. Assume that under current condition, the resolution of the area of concern is $600\times300$, and the display resolution of the display screen is $1280\times720$. System on Chip (SOC) is required to adopt different compression ratios for images in different areas to achieve compression of $1920\times1080$ image for displaying on a screen resolution of $1280\times720$. In the prior art, the vehicle's Electronic Control Unit (ECU) can cut a $1920\times1080$ image into a $1280\times720$ image and display it on the display screen. The cut area includes the above-mentioned area of concern $600\times300$, but in this way, image information of other areas is also lost. In this example, almost half of the effective pixels are lost.

In embodiments of the present invention, the compression coefficients of images in different areas can perform non-linear compression according to the importance (degree of attention) of the displayed area.

Specifically, in some embodiments, the first compression coefficient corresponding to the first area image can be set to 1, so that the first area image of priority concern maintains its original first resolution with sufficient clarity. Subsequently, according to the display screen's display resolution, the first resolution, and the second area image's original second resolution, the second compression coefficient corresponding to the second area image can be set to be greater than 1. By compressing the second resolution of the second area image that has a relatively low degree of attention, so that the display image conforms to the display resolution of the display screen.

In this regard, in some embodiments of the present invention, in the process of scaling the $1920\times1080$ area to a $1280\times720$ display screen to display, the area of concern $600\times300$ is used as the first area image, and its corresponding first compression coefficient is set to 1, so that the first area image of priority concern maintains its original first resolution, that is, no image compression processing is performed, for other areas belonging to the second area image, different compression ratios can be used for corresponding image compression processing. For example, the image in partial area 1 in the original image 200 in Fig. 2 may not be compressed, and the images in other partial areas 2 to 9 may be compressed.

Further, in some embodiments of the present invention, the compression processing of images in other partial areas 2 to 9 can be divided into compression using a fixed compression coefficient or compression using a gradient coefficient.

Specifically, in some preferred embodiments, the method of using a fixed compression coefficient comprises that according to a difference between the display screen's horizontal display resolution and the first area image's first horizontal resolution, determining each of the second area image's horizontal display resolutions that are in areas horizontally adjacent to the first area image. Then, according to a ratio of the horizontal display resolution and a sum of the second horizontal resolutions of the second area images that are in areas horizontally adjacent to the first area image, determining a fixed second horizontal compression coefficient of each of the second area images in areas horizontally adjacent to the first area image. In the original image 200 shown in Fig. 2, it can correspond to perform a horizontal compression of the images of partial areas 2 and 3 with a fixed compression coefficient.

For example, the horizontal display resolution of the display screen is 1280 and the first horizontal resolution of the first area image is 600, so the difference between the two is 1280-600=680. Here 680 is the horizontal display resolution of the display screen, which is the remaining pixels that can be displayed in the horizontal direction of the display screen. The sum of the second horizontal resolutions of each of second area images that are in areas horizontally adjacent to the first area image is 1920-600=1320, here 1320 is the horizontal remaining pixels in the original image 200. The ratio of the horizontal remaining pixels in the original image 200 to the remaining pixels that can be displayed in the horizontal direction of the display screen is 1320/680=1.9, here 1.9 is the fixed second horizontal compression coefficient of each of second area images in areas horizontally adjacent to the first area image.

For this, please refer to Figure. 3, Figure. 3 is a curve schematic diagram of a fixed coefficient compression of a display image provided according to some embodiments of the present invention. As shown in Fig. 3, in the fixed coefficient compression mode of the display image, in the right half plane (horizontal pixel - horizontal compression ratio) of Fig. 3, the first horizontal compression coefficient corresponding to the first area image 311 is 1, and the fixed second horizontal compression coefficient corresponding to each second area image 312 horizontally adjacent to the first area image 311 is 1.9, that is, it can correspond to the fixed horizontal compression coefficient of the images of partial areas 2 and 3 in the original image 200 in Fig. 2.

Optionally, in other preferred embodiments, according to a difference between the display screen's vertical display resolution and the first area image's first vertical resolution, determining each of the second area image's vertical display resolutions that are in areas vertically adjacent to the first area image. Then, according to a ratio of the vertical display resolution and a sum of the second vertical resolutions of the second area images that are in areas vertically adjacent to the first area image, determining a fixed second vertical compression coefficient of each of the second area images in areas vertically adjacent to the first area image. In the original image 200 shown in Fig. 2, it can correspond to perform a vertical compression of the images of partial areas 4 and 5 with a fixed compression coefficient.

For example, the vertical display resolution of the display screen is 720 and the first vertical resolution of the first area image is 300, so the difference between the two is 720-300=420. Here 420 is the vertical display resolution of the display screen, which is the remaining pixels that can be displayed in the vertical direction of the display screen. The sum of the second vertical resolutions of each of second area image that are in areas vertically adjacent to the first area image is 1080-300=780, here 780 is the vertical remaining pixels in the original image 200. The ratio of the vertical remaining pixels in the original image 200 to the remaining pixels that can be displayed in the vertical direction of the display screen is 780/420=1.86, here 1.86 is the fixed second vertical compression coefficient of each of second area images in areas horizontally adjacent to the first area image.

As shown in Fig. 3, in the fixed coefficient compression mode of the display image, in the fixed coefficient compression mode of the display image, in the left half plane (vertical pixel - vertical compression ratio) of Fig. 3, the first vertical compression coefficient corresponding to the first area image 321 is 1, and the fixed second vertical compression coefficient corresponding to each second area image 322 vertically adjacent to the first area image 321 is 1.86, that is, it can correspond to the fixed vertical compression coefficient of the images of partial areas 4 and 5 in the original image 200 in Fig. 2.

Further, in some preferred embodiments of the present invention, since the partial areas 6, 7, 8, and 9 in Fig. 2 are areas of relatively low concern, so that it is possible to combine the above-mentioned fixed second horizontal compression coefficient and the fixed second vertical compression coefficient to compress the partial areas 6, 7, 8 and 9 to perform a comprehensive compression processing.

Specifically, the second horizontal compression coefficient of the remaining second area images vertically adjacent to the second area image (corresponding to partial areas 6, 8 and 7, 9 in Fig. 2) may be determined based on the fixed second horizontal compression coefficient of each second area image (corresponding to partial areas 2, 3 in Fig. 2) in areas horizontally adjacent to the first area image (corresponding to partial area 1 in Fig. 2). Optionally, the second vertical compression coefficient of the remaining second area images horizontally adjacent to the second area image (corresponding to partial areas 6, 8 and 7, 9 in Fig. 2) may be determined based on the fixed second vertical compression coefficient of each second area image (corresponding to partial areas 4, 5 in Fig. 2) in areas vertically adjacent to the first area image (corresponding to partial area 1 in Fig. 2). For example, the second horizontal compression coefficients of the partial areas 6, 8 and 7, 9 in Fig. 2 can all be a fixed second horizontal compression coefficient, for example, they are all determined to be 1.9 as mentioned above. The second vertical compression coefficients of the partial areas 6, 8 and 7, 9 can also be a fixed second vertical compression coefficient, for example, they are all determined to be 1.86 as mentioned above.

In other preferred embodiments of the invention, the method of using a gradient coefficient compression comprises that the remaining images except the first area image can be compressed using the gradient coefficient method to perform image compression processing, wherein the compression coefficient of the images close to the first area image of concern is 1, and as pixels move away from the first area image, their compression coefficients gradually become larger.

Specifically, in some embodiments, according to the first compression coefficient, the fixed second horizontal compression coefficient of each of the second area images in areas horizontally adjacent to the first area image, and horizontal distances from each of the second area images to the first area image, determining each of the second area image's gradient second horizontal compression coefficients. And according to the first compression coefficient, the fixed second vertical compression coefficient of each of the second area images in areas vertically adjacent to the first area image, and vertical distances from each of the second area images to the first area image, determining each of the second area image's gradient second vertical compression coefficients.

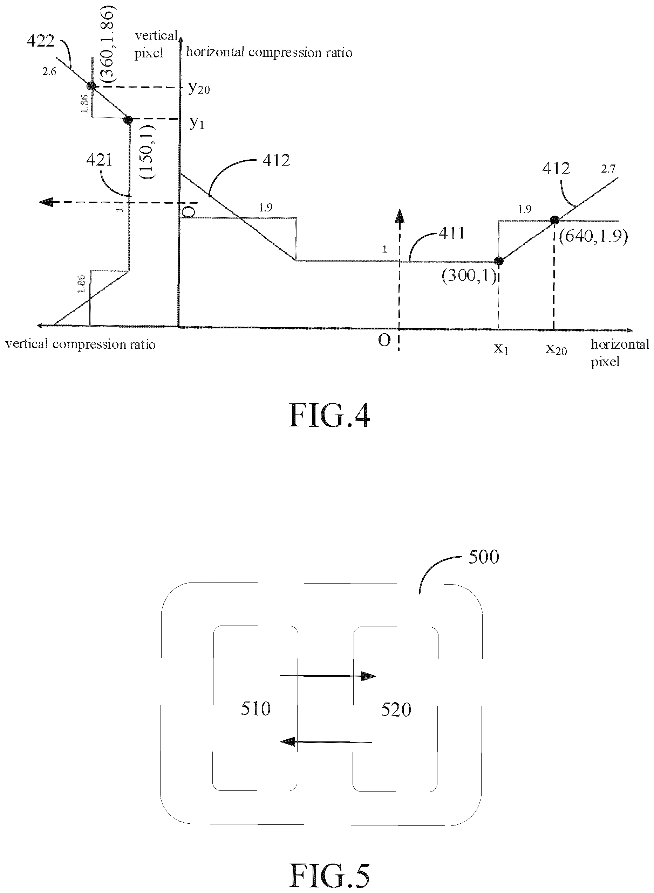

For example, please refer to Figure. 4, Figure. 4 is a curve schematic diagram of gradient coefficient compression of a display image provided according to some embodiments of the present invention. As shown in Fig. 4, according to the first compression coefficient $k_1$ corresponding to the first area image 411, for example $k_1$ is 1, and a fixed second horizontal compression coefficient $k_{20x}$ of second area images 412 in areas horizontally adjacent to the first area image 411, for example, $k_{20x}$ is 1.9 above, and an area centre abscissa $x_{20}$, for example, when the horizontal midpoint of the first image area 411 is used as the coordinate origin O, $x_{20}$ is 1280/2=640, and the first area image 411 close to the second area image 412 's critical abscissa $x_1$, for example, $x_1$ is 600/2=300, determining each of the second area image 412 's second horizontal compression coefficients' horizontal gradient slope

$$a_x = \frac{k_{20x} - k_1}{x_{20} - x_1} = \frac{1.9 - 1}{640 - 300} = 0.0026$$

. Then, according to the horizontal gradient slope $a_x$, the first compression coefficient $k_1$, the critical abscissa $x_1$, and abscissas $x_2$ of each of the second area images 412, for example , $x_2$ is 1920/2=960 , it is possible to calculate the second area image's gradient second horizontal compression coefficient $k_{2x} = a_x \times (x_2 - x_1) + k_1 ==0.0026\times$ ( 960-300 ) +1=2.7.

As shown in Fig. 4, in other embodiments, according to the first compression coefficient $k_1$ corresponding to the first area image 421, for example $k_1$ is 1, and a fixed second vertical compression coefficient $k_{20y}$ of second area images 422 in areas vertically adjacent to the first area image 421, for example, $k_{20y}$ is 1.86 above, and an area centre ordinate $y_{20}$, for example, when the vertical midpoint of the first image area 421 is used as the coordinate origin O, $y_{20}$ is 720/2=360, and the first area image 421 close to the second area image 422 's critical ordinate $y_1$, for example, $y_1$ is 300/2=150, determining each of the second area image 422 's second vertical compression coefficients' vertical gradient

$$a_y = \frac{k_{20y} - k_1}{y_{20} - y_1} = \frac{1.86 - 1}{360 - 150} = 0.0041$$

slope .

Then, according to the vertical gradient slope $a_y$, the first compression coefficient $k_1$, the critical ordinate $y_1$, and ordinates $y_2$ of each of the second area images 422, for example , $y_2$ is 1080/2=540, it is possible to calculate the second area image's gradient second vertical compression coefficient $k_{2y} = a_y \times (y_2 - y_1) + k_1 = 0.0041\times$ ( 540-150 ) +1=2.6.

Through the above embodiments, image compression with a low scaling ratio is performed on the partial images close to the area of concern (the area of first area image), and image compression with a high scaling ratio is performed on the partial images far away from the area of concern. This gradient coefficient compression method can use linear gradient coefficients (as shown in Fig. 4) or exponential gradient coefficients. In this way, images of all areas captured by the camera can still be seen on the display screen, avoiding blind spots in driving, but at the same time, it can ensure sufficient clarity of the area of concern to improve safety during driving.

Those skilled in the art can understand that the solutions of the linear gradient compression coefficient and the exponential gradient compression coefficient listed above are only a non-limiting implementation provided by the present invention and are intended to clearly demonstrate the main concept of the present invention, and it provides a specific solution that is convenient for the public to implement, but is not used to limit the protection scope of the present invention. In some other embodiments, any processing method that can start from the first area image and then perform linear or nonlinear gradient compression on the surrounding images is within the scope of the present invention.

Finally, perform Step S 150: according to the first compression coefficient and the second compression coefficient, performing partition compression on the first area image and the second area image to obtain a display image

In some embodiments, according to the first compression coefficient and the second compression coefficient obtained above, the first area image and the second area image in the original image 200 can be partition compressed, so that it can be obtained not only all areas during driving, and the display image conforms to the display resolution of the display screen.

Although the method is illustrated and described as a series of actions for the purpose of simplifying the explanation, it should be understood and appreciated that these methods are not limited by the order of the actions. Those skilled in the art may understand that some actions may occur in different orders and/or concurrently with other actions that are illustrated and described herein or that are not illustrated and described herein, in accordance with one or more embodiments.

So far, the display method for images outside a vehicle provided by the first aspect of the present invention has been introduced. Next, please refer to Figure. 5, Figure. 5 is a structural block diagram of a display device for images outside a vehicle provided according to some embodiments of the present invention.

As shown in Fig. 5, the display device for images outside a vehicle 500 can configure a memory 510 and a processor 520. The memory 510 comprises but is not limited to the above-mentioned computer-readable storage medium provided by the third aspect of the present invention, which having computer instructions stored thereon. The processor 520 is connected to the memory 510 and is configured to execute computer instructions stored on the memory 510 to implement the above-mentioned display method for images outside a vehicle provided by the first aspect of the present invention.

Further, in some preferred embodiments, the display device for images outside a vehicle 500 may comprise at least one display screen, wherein the at least one display screen may be arranged at a position of an exterior rearview mirror on a left side of the vehicle, a position of a exterior rearview mirror on a right side of the vehicle, and/ or a position of an interior rearview mirror as an electronic rearview mirror. Optionally, in some embodiments, the at least one display screen can also be integrated into the vehicle's central control display screen to display images outside the vehicle.

In summary, the present invention provides a display method for images outside a vehicle, a display device for images outside a vehicle, and a computer-readable storage medium, which can not only meet the clarity of driver's area of concern during driving, but also take into account the display of images in other areas to ensure that there are no blind spots during the entire driving process.

The previous description of the disclosure is provided to enable any person skilled in the art to make or use the disclosure. Various modifications to the present disclosure will be obvious to those skilled in the art, and the general principles defined herein may be applied to other variations without departing from the spirit or scope of the disclosure. Thus, the present disclosure is not intended to be limited to the examples and designs described herein, but is to be accorded the broadest scope of the principles and novel features disclosed herein.

## Claims

1. A display method for images outside a vehicle, which is **characterized in that** comprising following steps:

   obtaining an original image (200) from outside the vehicle;
   obtaining vehicle data and/or driver's data to determine the original image (200)'s usage scenario;
   according to the usage scenario, the original image (200) is divided into at least one first area image (311, 321, 411, 421) of concern and at least one second area image (312, 322, 412, 422) of no concern;
   determining respectively a first compression coefficient corresponding to the first area image (311, 321, 411, 421) and a second compression coefficient corresponding to the second area image (312, 322, 412, 422), wherein the first compression coefficient is smaller than the second compression coefficient; and
   according to the first compression coefficient and the second compression coefficient, performing partition compression on the first area image (311, 321, 411, 421) and the second area image (312, 322, 412, 422) to obtain a display image.

2. The display method according to claim 1, **characterized in that** the vehicle data comprises driving speed and/or turn signal, the step of obtaining vehicle data and/or driver's data to determine the original image (200)'s usage scenario comprises:

   in response to the driving speed being greater than a preset speed threshold, it is determined that the vehicle is in a high-speed driving mode; and/or
   in response to the driving speed being less than or equal to the speed threshold, it is determined that the vehicle is in a low-speed driving mode; and/or
   in response to the steering signal, it is determined that the vehicle is in steering mode.

3. The display method according to claim 2, **characterized in that** the step of according to the usage scenario, the original image (200) is divided into at least one first area image (311, 321, 411, 421) of concern and at least one second area image (312, 322, 412, 422) of no concern comprises:

   in the high-speed driving mode, in the original image (200), at least one area image far away from the vehicle is determined as the first area image (311, 321, 411, 421), and in the original image (200), at least one area image close to the vehicle is determined as the second area image (312, 322, 412, 422); and/or
   in the low-speed driving mode, in the original image (200), at least one area image close to the vehicle is determined as the first area image (311, 321, 411, 421), and in the original image (200), at least one area image far away from the vehicle is determined as the second area image (312, 322, 412, 422); and/or

in the steering mode, in the original image (200), at least one area image located in the steering direction is determined as the first area image (311, 321, 411, 421), and in the original image (200), other area images are determined as the second area image (312, 322, 412, 422).

4. The display method according to any of claims 1 to 3, **characterized in that** the driver's data comprises driver's eye movement signal, the step of obtaining vehicle data and/or driver's data to determine the original image (200)'s usage scenario comprises: in response to the eye movement signal indicating that the driver is observing a display screen, it is determined to be in observation mode,

the step of according to the usage scenario, the original image (200) is divided into at least one first area image (311, 321, 411, 421) of concern and at least one second area image (312, 322, 412, 422) of no concern comprises: in the observation mode, the driver's area of concern on the display screen is determined as the first area image (311, 321, 411, 421), and in the original image (200), other area images are determined as the second area image (312, 322, 412, 422).

5. The display method according to any one of claims 1 to 4, **characterized in that** the steps of determining respectively a first compression coefficient corresponding to the first area image (311, 321, 411, 421) and a second compression coefficient corresponding to the second area image (312, 322, 412, 422) comprises:

setting corresponding to the first area image's (311, 321, 411, 421) first compression coefficient to 1, so that the first area image (311, 321, 411, 421) maintains its original first resolution; and according to the display screen's display resolution, the first resolution, and the second area image's (312, 322, 412, 422) original second resolution, setting corresponding to the second area image's (312, 322, 412, 422) second compression coefficient to be greater than 1 to compress the second resolution, so that the display image conforms to the display resolution.

6. The display method according to claim 5, **characterized in that** the steps of according to the display screen's display resolution, the first resolution, and the second area image's (312, 322, 412, 422) original second resolution, setting corresponding to the second area image's (312, 322, 412, 422) second compression coefficient to be greater than 1 to compress the second resolution, so that the display image conforms to the display resolution comprises:

according to a difference between the display screen's horizontal display resolution and the first area image (311)'s first horizontal resolution, determining each of the second area image (312)'s horizontal display resolutions that are in areas horizontally adjacent to the first area image (311); and
according to a ratio of the horizontal display resolution and a sum of the second horizontal resolutions of the second area images (312) that are in areas horizontally adjacent to the first area image (311), determining a fixed second horizontal compression coefficient of each of the second area images (312) in areas horizontally adjacent to the first area image (311).

7. The display method according to claim 5 or 6, **characterized in that** the steps of according to the display screen's display resolution, the first resolution, and the second area image's (312, 322, 412, 422) original second resolution, setting corresponding to the second area image's (312, 322, 412, 422) second compression coefficient to be greater than 1 to compress the second resolution, so that the display image conforms to the display resolution comprises:

according to a difference between the display screen's vertical display resolution and the first area image's (321) first vertical resolution, determining each of the second area image (322)'s vertical display resolutions that are in areas vertically adjacent to the first area image (321); and
according to a ratio of the vertical display resolution and a sum of the second vertical resolutions of the second area images (322) that are in areas vertically adjacent to the first area image (321), determining a fixed second vertical compression coefficient of each of the second area images (322) in areas vertically adjacent to the first area image (321).

8. The display method according to claim 6 or 7, **characterized in that** the steps of according to the display screen's display resolution, the first resolution, and the second area image's (312, 322, 412, 422) original second resolution, setting corresponding to the second area image's (312, 322, 412, 422) second compression coefficient to be greater than 1 to compress the second resolution, so that the display image conforms to the display resolution further comprises:

according to the fixed second horizontal compression coefficient of each of the second area images (312) in areas horizontally adjacent to the first area image (311), determining a second horizontal compression coefficient of remaining second area images vertically adjacent to the second area image (312); and/or
according to the fixed second vertical compression coefficient of each of the second area images (322) in areas vertically adjacent to the first area image (321), determining second vertical compression coefficients of remaining second area images horizontally adjacent to the second area image (322).

9. The display method according to claim 6 or 7, **characterized in that** the steps of according to the display screen's display resolution, the first resolution, and the second area image's (312, 322, 412, 422) original second resolution, setting corresponding to the second area image's (312, 322, 412, 422) the second compression coefficient to be greater than 1, compress the second resolution, so that the display image conforms to the display resolution further comprises:

according to the first compression coefficient, the fixed second horizontal compression coefficient of each of the second area images (412) in areas horizontally adjacent to the first area image (411), and horizontal distances from each of the second area images (412) to the first area image (411), determining each of the second area image (412)'s gradient second horizontal compression coefficients; and
according to the first compression coefficient, the fixed second vertical compression coefficient of each of the second area images (422) in areas vertically adjacent to the first area image (421), and vertical distances from each of the second area images (422) to the first area image (421), determining each of the second area image (422)'s gradient second vertical compression coefficients.

10. The display method according to claim 9, **characterized in that** the steps of according to the first compression coefficient, the fixed second horizontal compression coefficient of each of the second area images (412) in areas horizontally adjacent to the first area image (411), and horizontal distances from each of the second area images (412) to the first area image (411), determining each of the second area image's (412) gradient second horizontal compression coefficients comprises:

according to the first compression coefficient $k_1$, a fixed second horizontal compression coefficient $k_{20x}$ of second area images (412) in areas horizontally adjacent to the first area image (411) and an area centre abscissa $x_{20}$, and the first area image (411) close to the second area image's (412) critical abscissa $x_1$, determining each of the second area image's (412) second horizontal compression coefficients'
horizontal gradient slope $a_x = \dfrac{k_{20x} - k_1}{x_{20} - x_1}$ ;
and
according to the horizontal gradient slope $a_x$, the first compression coefficient $k_1$, the critical abscissa $x_1$, and abscissas $x_2$ of each of the second area images (412), calculating the second area image's (412) gradient second horizontal compression coefficient $k_{2x} = a_x \times (x_2 - x_1) + k_1$.

11. The display method according to claim 9 or 10, **characterized in that** the steps of according to the first compression coefficient, the fixed second vertical compression coefficient of each of the second area images (422) in areas vertically adjacent to the first area image (421), and vertical distances from each of the second area images (422) to the first area image (421), determining each of the second area image's (422) gradient second vertical compression coefficients comprises:

according to the first compression coefficient $k_1$, a fixed second vertical compression coefficient $k_{20y}$ of second area images (422) in areas vertically adjacent to the first area image (421) and an area centre ordinate $y_{20}$, and the first area image (421) close to the second area image's (422) critical ordinate $y_1$, determining each of the second area image's (422) second vertical compression coefficients' vertical gradient slope
$a_y = \dfrac{k_{20y} - k_1}{y_{20} - y_1}$ ; and
according to the vertical gradient slope $a_y$, the first compression coefficient $k_1$, the critical ordinate $y_1$, and ordinates $y_2$ of each of the second area images (422), calculating the second area image's (422) gradient second vertical compression coefficient $k_{2y} = a_y \times (y_2 - y_1) + k_1$.

12. The display method according to any of the preceding claims, **characterized in that** the steps of obtaining an original image from outside the vehicle comprises:

via a camera facing rear of the vehicle to collect rear view images of the vehicle; or
via the vehicle's Around View Monitor system to obtain panoramic images around the vehicle.

13. A display device (500) for images outside a vehicle, **characterized in that** the display device (500) comprises:

a memory (510); and

a processor (520), the processor (520) being connected to the memory (510) and configured to implement the display method for images outside a vehicle according to any one of claims 1 to 12.

14. The display device (500) according to claim 13, which is **characterized in that** the display device (500) further comprises:
at least one display screen, wherein the at least one display screen is arranged at a position of an exterior rearview mirror on a left side of the vehicle, a position of a exterior rearview mirror on a right side of the vehicle, and/or a position of an interior rearview mirror, and/or integrated into the vehicle's central control display screen.

15. A computer-readable storage medium, having computer instructions stored thereon, which is **characterized in that** when the computer instructions are executed by a processor (520), the display method for images outside a vehicle according to any one of claims 1 to 12 is implemented.

obtaining an original image from outside the vehicle

S110

obtaining vehicle data and/or driver's data to determine the original image's usage scenario

S120

according to the usage scenario, the original image is divided into at least one first area image of concern and at least one second area image of no concern

S130

determining respectively a first compression coefficient corresponding to the first area image and a second compression coefficient corresponding to the second area image,

S140

according to the first compression coefficient and the second compression coefficient, performing partition compression on the first area image and the second area image to obtain a display image

S150

# FIG.1

<u>200</u>

FIG.2

FIG.3

FIG.4

FIG.5

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/023182 A1 (IMATOH YUKI [JP]) 24 January 2019 (2019-01-24) | 1,2,5-8, 12-15 | INV. H04N19/132 |
| Y | * figures 1, 2A, 2B * * paragraph [0002] - paragraph [0006] * * paragraph [0012] - paragraph [0018] * * paragraph [0030] - paragraph [0036] * * Equation (2) * | 4 | B60R99/00 H04N19/167 H04N19/17 H04N19/59 |
| X | CN 110 509 851 A (SHANGHAI YUXING ELECTRONIC TECH CO LTD) 29 November 2019 (2019-11-29) | 1-3,5,6, 8-15 | |
| Y | * figures 4, 6 * * paragraph [0001] * * paragraph [0027] - paragraph [0044] * | 4 | |
| Y | DE 10 2018 208833 A1 (BOSCH AUTOMOTIVE PROD SUZHOU [CN]) 13 December 2018 (2018-12-13) * paragraph [0006] - paragraph [0011] * | 4 | |
| A | US 2015/172545 A1 (SZABO MATTHEW JOSEPH [US] ET AL) 18 June 2015 (2015-06-18) * paragraph [0268] - paragraph [0275] * | 1-15 | TECHNICAL FIELDS SEARCHED (IPC) H04N B60R |

The present search report has been drawn up for all claims

| Place of search | Date of completion of the search | Examiner |
|---|---|---|
| Munich | 15 November 2024 | Regidor Arenales, R |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.............................................................................................

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**                    EP 24 18 6655

This annex lists the patent family members relating to the patent documents cited in  the above-mentioned European search report.
The members are as contained in the European Patent Office EDP file on
The European Patent Office is in no way liable for these particulars which are merely given for the purpose of information.

15-11-2024

| Patent document cited in search report | | Publication date | Patent family member(s) | | Publication date |
|---|---|---|---|---|---|
| US 2019023182 | A1 | 24-01-2019 | CN | 109291853 A | 01-02-2019 |
| | | | JP | 7141817 B2 | 26-09-2022 |
| | | | JP | 2019023804 A | 14-02-2019 |
| | | | US | 2019023182 A1 | 24-01-2019 |
| CN 110509851 | A | 29-11-2019 | NONE | | |
| DE 102018208833 | A1 | 13-12-2018 | CN | 109141461 A | 04-01-2019 |
| | | | DE | 102018208833 A1 | 13-12-2018 |
| US 2015172545 | A1 | 18-06-2015 | NONE | | |

EPO FORM P0459

For more details about this annex : see Official Journal of the European Patent Office, No. 12/82